# EUROPÄISCHE PATENTSCHRIFT

(11) **EP 2 943 359 B1**
(45) Veröffentlichungstag und Bekanntmachung des Hinweises auf die Patenterteilung: **20.03.2019**
(21) Anmeldenummer: 13815699.7
(22) Anmeldetag: 06.12.2013
(51) Int. Cl.: B60C 11/12

(54) **FAHRZEUGLUFTREIFEN FÜR DEN EINSATZ UNTER WINTERLICHEN FAHRBEDINGUNGEN**
PNEUMATIC VEHICLE TYRE FOR USE IN WINTER DRIVING CONDITIONS
PNEU DE VÉHICULE POUR UNE UTILISATION EN CONDITIONS DE CONDUITE HIVERNALES

(30) Priorität: 08.01.2013 DE 102013100101
(43) Veröffentlichungstag der Anmeldung: 18.11.2015
(73) Patentinhaber: Continental Reifen Deutschland GmbH, 30165 Hannover (DE)
(72) Erfinder: DIENSTHUBER, Franz, 60528 Frankfurt (DE); SCHLITTENHARD, Jan, 30900 Wedemark (DE); BRANDAU, Christian, 30419 Hannover (DE)
(74) Vertreter: Finger, Karsten
(86) Internationale Anmeldenummer: PCT/EP2013/075737
(87) Internationale Veröffentlichungsnummer: WO 2014/108255

(56) Entgegenhaltungen:
- EP-A1- 1 580 034
- EP-A2- 0 968 850
- JP-A- 2000 301 914
- JP-A- 2006 151 233

## Beschreibung

Die Erfindung betrifft einen Fahrzeugluftreifen für den Einsatz unter winterlichen Fahrbedingungen, mit einem Laufstreifen, welcher Profilblöcke mit Feineinschnitten aufweist und wobei der Laufstreifen zwei axial außen angeordnete Schulterbereiche und einen zwischen diesen Schulterbereichen angeordneten mittigen Laufstreifenbereich aufweist, wobei die Oberfläche der Profilblöcke parallel zueinander angeordnete Nuten aufweist, welche von Profilblockkante zu Profilblockkante reichen.

Ein Fahrzeugluftreifen gemäß dem Oberbegriff ist aus der JP 2006151233 A bekannt.
Dieser Fahrzeugluftreifen weist ein Laufstreifenprofil mit Profilelementen auf, welche Feineinschnitten und flache einander kreuzende Nuten enthält. Diese Profilelemente mit Feineinschnitten und flachen, einander kreuzenden Nuten sind über die gesamte axiale Breite des Laufstreifens angeordnet. Ebenfalls gitterförmige schmale Nuten sind aus der EP 1 580 034 A1 bekannt. Die EP 0 968 850 A2 offenbart schmale Nuten, welche über die gesamte Laufstreifenbreite in einer Richtung, der axialen Richtung, orientiert sind.
Insbesondere PKW- und Van-Reifen für den winterlichen Einsatz weisen einen derartigen Laufstreifen mit Feineinschnitten auf. Die Feineinschnitte dienen dazu, die Griffeigenschaften des Reifens unter winterlichen Fahrbedingungen sicherzustellen und gleichzeitig ein gutes Fahrverhalten und gute Handlingeigenschaften auf trockenen und nassen Fahrbahnen zu gewährleisten.
Die Feineinschnitte in Winterreifen nehmen bei winterlichen Bedingungen u.a. Schnee auf, um die Schnee/Schnee - Reibung zu erhöhen und derart eine bessere Haftung des Reifens auf winterlicher Fahrbahn zu ermöglichen. Zudem werden eine Vielzahl an Kanten zur Verfügung gestellt, die in die winterliche Fahrbahn eingreifen können und für die notwendige Traktion sorgen. Die Feineinschnitte weisen üblicherweise eine Breite von 0,3 mm bis 0,7 mm auf, eine bestimmte Beabstandung zueinander und eine radiale Erstreckung von etwa 7 mm auf.

In Bezug auf die Traktionseigenschaften besteht jedoch weiterhin Verbesserungsbedarf.
Daher ist es die Aufgabe der Erfindung, einen Fahrzeugluftreifen für den Einsatz unter winterlichen Fahrbedingungen bereitzustellen, der in Bezug auf seine Traktionseigenschaften verbessert ist.

Gelöst wird die Aufgabe, indem diese Nuten jeweils eine radiale Erstreckung von 0,2 mm bis 0,4 mm und eine Breite von 0,2 mm bis 0,4 mm aufweisen, dass im mittigen Laufstreifenbereich diese Nuten ausschließlich etwa in axialer Richtung angeordnet sind und dass diese Nuten in den Schulterbereichen ausschließlich etwa in Umfangsrichtung angeordnet sind.
Es ist erfindungsgemäß ein Fahrzeugluftreifen für den Einsatz unter winterlichen Fahrbedingungen mit einem Laufstreifen geschaffen, der zusätzlich zu den Feineinschnitten Nuten auf der Oberfläche der Profilblöcke aufweist. Diese Nuten sind im mittigen Laufstreifenbereich ausschließlich etwa in axialer Richtung angeordnet und verbessern diesen Laufstreifenbereich in Bezug auf die Traktion bei Longitudinalkräften. Denn die Nuten der Profilblöcke des mittigen Laufstreifenbereiches sind quer, in einem Winkel von etwa 90° zu den Longitudinalkräften angeordnet.
In den beiden Schulterbereichen sind diese Nuten ausschließlich etwa in Reifenumfangsrichtung angeordnet und verbessern diesen Laufstreifenbereich in Bezug auf die Traktion bei Querkräften. Denn die Nuten der Profilblöcke der Schulterbereiche sind quer, in einem Winkel von etwa 90° zu den Querkräften angeordnet. Generell ist der mittige Laufstreifenbereich verstärkt in Bezug auf Umfangskräfte (Longitudinalkräfte) beansprucht, während die Schulterbereiche verstärkt in Bezug auf Querkräfte beansprucht sind.
Der Fahrzeugluftreifen für den Einsatz unter winterlichen Fahrbedingungen ist in Bezug auf seine Traktionseigenschaften verbessert.

"Axiale Richtung" meint die Richtung entlang der Reifenachse. "Umfangsrichtung" meint die Richtung entlang des Reifen- bzw. Laufstreifenabrollens. "Radiale Richtung" meint die Richtung vom Reifenmittelpunkt zum Laufstreifen.

Vorteilhaft ist es, wenn die Nut eine radiale Erstreckung von 0,2 mm aufweist.

Vorteilhaft ist es, wenn die Nut eine Breite von 0,2 mm aufweist.

Zweckmäßig ist es, wenn zwei benachbarte Nuten eine Beabstandung von 1 mm bis 2 mm, vorzugweise von 1 mm aufweisen.
In einer bestimmten Ausführungsform sind -in Aufsicht auf den Laufstreifen- die Nuten kreuzend zu den Feineinschnitten angeordnet.
Vorteilhaft ist es, wenn die Feineinschnitte - in Aufsicht auf den Laufstreifen - sinusförmige Feineinschnitte sind.

Zweckmäßig ist es, wenn die Nuten nur innerhalb der Bodenaufstandsfläche des Fahrzeugluftreifens angeordnet sind.
Dieser Fahrzeugluftreifen ist vorzugsweise ein PKW- oder Van-Reifen.
Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine Aufsicht auf einen Abschnitt eines Laufstreifens eines erfindungsgemäßen Fahrzeugluftreifens für den Einsatz unter winterlichen Fahrbedingungen;
Fig. 2 einen Schnitt A - A durch den Laufstreifen der Fig. 1.

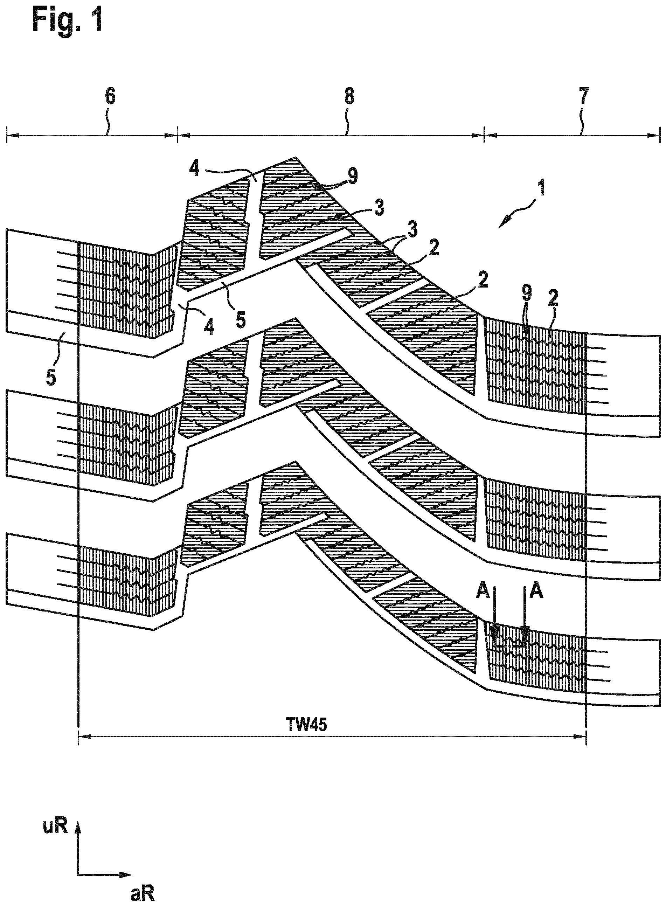

Die **Fig. 1** zeigt eine Aufsicht auf einen Abschnitt eines Laufstreifens 1 eines erfindungsgemäßen Fahrzeugluftreifens für den Einsatz unter winterlichen Fahrbedingungen. Der Laufstreifen 1 weist Profilblöcke 2 mit Feineinschnitten 3 auf. Die Profilblöcke 2 sind durch Umfangsrillen 4 und Querrillen 5 begrenzt. Der Laufstreifen 1 weist zwei axial außen angeordnete Schulterbereiche 6, 7 und einen zwischen diesen Schulterbereichen angeordneten mittigen Laufstreifenbereich 8 aufweist. Die Oberfläche der Profilblöcke 2 weist parallel zueinander angeordnete Nuten 9, welche von Profilblockkante zu Profilblockkante reichen. Diese Nuten 9 sind im mittigen Laufstreifenbereich 8 in etwa in axialer Richtung aR angeordnet. In den Schulterbereichen 6, 7 sind diese Nuten 9 in etwa in Umfangsrichtung uR angeordnet. Die Feineinschnitte 3 sind sinusförmige Feineinschnitte und sind kreuzend zu den Nuten 9 angeordnet. Die Nuten 9 sind nur innerhalb der Bodenaufstandsfläche (TW45) des Reifens ausgebildet.

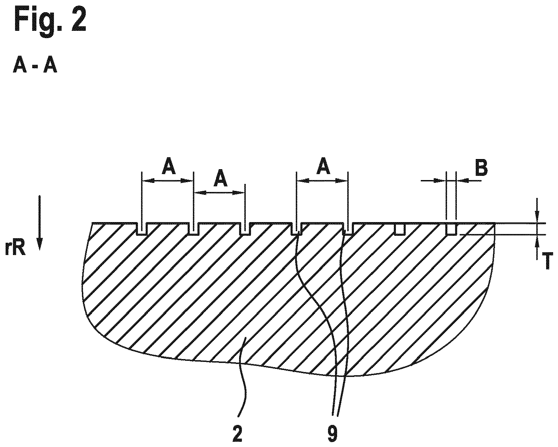

Die **Fig. 2** zeigt einen Schnitt A - A durch den Laufstreifen der Fig. 1. Dieser Schnitt schneidet die Nuten 9 in etwa unter einem Winkel von 90°. Gleiche Bauteile der Fig.1 und der Fig. 2 sind mit gleichen Bezugsziffern ausgewiesen. Eine Nut 9 hat eine Breite B und eine Tiefe T von je 0,2 mm. Zwei benachbarte Nuten 9 weisen eine Beabstandung A von 1 mm auf.

### Bezugszeichenliste

- 1: Laufstreifen
- 2: Profilblock
- 3: Feineinschnitt
- 4: Umfangsrille
- 5: Querrille
- 6: Schulterbereich
- 7: Schulterbereich
- 8: mittiger Laufstreifenbereich
- 9: Nut
- A: Abstand zweier benachbarter Nuten
- B: Breite einer Nut
- T: Tiefe einer Nut
- rR: radiale Richtung
- aR: axiale Richtung
- uR: Umfangsrichtung

## Patentansprüche

1. Fahrzeugluftreifen für den Einsatz unter winterlichen Fahrbedingungen, mit einem Laufstreifen (1), welcher Profilblöcke (2) mit Feineinschnitten (3) aufweist und wobei der Laufstreifen (1) zwei axial außen angeordnete Schulterbereiche (6, 7) und einen zwischen diesen Schulterbereichen (6, 7) angeordneten mittigen Laufstreifenbereich (8) aufweist, wobei die Oberfläche der Profilblöcke (2) parallel zueinander angeordnete Nuten (9) aufweist, welche von Profilblockkante zu Profilblockkante reichen, **dadurch gekennzeichnet, dass** die Nuten (9) jeweils eine radiale Erstreckung (T) von 0,2 mm bis 0,4 mm und eine Breite (B) von 0,2 mm bis 0,4 mm aufweisen, dass im mittigen Laufstreifenbereich (8) diese Nuten (9) ausschließlich etwa in axialer Richtung (aR) angeordnet sind und dass diese Nuten (9) in den Schulterbereichen (6, 7) ausschließlich etwa in Umfangsrichtung (uR) angeordnet sind.

2. Fahrzeugluftreifen nach Anspruch 1,
**dadurch gekennzeichnet, dass** die Nut (9) eine radiale Erstreckung (T) von 0,2 mm aufweist.

3. Fahrzeugluftreifen nach Anspruch 1 oder 2, **dadurch gekennzeichnet, dass** die Nut (9) eine Breite (B) von 0,2 mm aufweist.

4. Fahrzeugluftreifen nach einem oder mehreren der vorangehenden Ansprüche, **dadurch gekennzeichnet, dass** zwei benachbarte Nuten (9) eine Beabstandung von 1 mm bis 2 mm, vorzugweise von 1 mm aufweisen.

5. Fahrzeugluftreifen nach einem oder mehreren der vorangehenden Ansprüche, **dadurch gekennzeichnet, dass** -in Aufsicht auf den Laufstreifen- die Nuten (9) kreuzend zu den Feineinschnitten (3) angeordnet sind.

6. Fahrzeugluftreifen nach einem oder mehreren der vorangehenden Ansprüche, **dadurch gekennzeichnet, dass** die Feineinschnitte (3) - in Aufsicht auf den Laufstreifen - sinusförmige Feineinschnitte sind.

7. Fahrzeugluftreifen nach einem oder mehreren der vorangehenden Ansprüche, **dadurch gekennzeichnet, dass** die Nuten (9) nur innerhalb der Bodenaufstandsfläche des Fahrzeugluftreifens angeordnet sind.

8. Fahrzeugluftreifen nach einem oder mehreren der vorangehenden Ansprüche, **dadurch gekennzeichnet, dass** dieser Fahrzeugluftreifen ein PKW- oder Van-Reifen ist.

## Claims

1. Pneumatic vehicle tire for use in winter driving conditions, having a tread (1), which has profile blocks (2) having fine sipes (3), and wherein the tread (1) has two axially outwardly arranged shoulder regions (6, 7) and a central tread region (8) arranged between said shoulder regions (6, 7), wherein the surface of the profile blocks (2) has grooves (9) arranged parallel to one another, which extend from profile-block edge to profile-block edge, **characterized in that** the grooves (9) each have a radial extent (T) of 0.2 mm to 0.4 mm and a width (B) of 0.2 mm to 0.4 mm, **in that** in the central tread region (8) said grooves (9) are arranged exclusively approximately in an axial direction (aR) and **in that** said grooves (9) are arranged exclusively approximately in a circumferential direction (uR) in the shoulder regions (6, 7).

2. Pneumatic vehicle tire according to Claim 1, **characterized in that** the groove (9) has a radial extent (T) of 0.2 mm.

3. Pneumatic vehicle tire according to Claim 1 or 2, **characterized in that** the groove (9) has a width (B) of 0.2 mm.

4. Pneumatic vehicle tire according to one or more of the preceding claims, **characterized in that** two adjacent grooves (9) have a spacing of 1 mm to 2 mm, preferably of 1 mm.

5. Pneumatic vehicle tire according to one or more of the preceding claims, **characterized in that** - in a plan view of the tread - the grooves (9) are arranged crosswise relative to the fine sipes (3).

6. Pneumatic vehicle tire according to one or more of the preceding claims, **characterized in that** - in a plan view of the tread - the fine sipes (3) are sinusoidal fine sipes.

7. Pneumatic vehicle tire according to one or more of the preceding claims, **characterized in that** the grooves (9) are arranged only within the ground contact surface of the pneumatic vehicle tire.

8. Pneumatic vehicle tire according to one or more of the preceding claims, **characterized in that** said pneumatic vehicle tire is a passenger car or van tire.

## Revendications

1. Pneumatique de véhicule pour l'utilisation dans des conditions de conduite hivernales, comprenant une bande de roulement (1) qui présente des blocs profilés (2) avec de fines entailles (3) et dans lequel la bande de roulement (1) présente deux régions d'épaulement (6, 7) disposées axialement à l'extérieur et une région de bande de roulement centrale (8) disposée entre ces régions d'épaulement (6, 7), la surface des blocs profilés (2) présentant des rainures (9) disposées parallèlement les unes aux autres, qui s'étendent d'une arête de bloc profilé à l'autre, **caractérisé en ce que** les rainures (9) présentent à chaque fois une étendue radiale (T) de 0,2 mm à 0,4 mm et une largeur (B) de 0,2 mm à 0,4 mm, **en ce que** dans la région de bande de roulement centrale (8), ces rainures (9) sont disposées exclusivement approximativement dans la direction axiale (aR) et **en ce que** ces rainures (9) sont disposées dans les régions d'épaulement (6, 7) exclusivement approximativement dans la direction périphérique (uR) .

2. Pneumatique de véhicule selon la revendication 1, **caractérisé en ce que** la rainure (9) présente une étendue radiale (T) de 0,2 mm.

3. Pneumatique de véhicule selon la revendication 1 ou 2, **caractérisé en ce que** la rainure (9) présente une largeur (B) de 0,2 mm.

4. Pneumatique de véhicule selon l'une quelconque ou plusieurs des revendications précédentes, **caractérisé en ce que** deux rainures adjacentes (9) présentent un espacement de 1 mm à 2 mm, de préférence de 1 mm.

5. Pneumatique de véhicule selon l'une quelconque ou plusieurs des revendications précédentes, **caractérisé en ce que**, en vue de dessus sur la bande de roulement, les rainures (9) sont disposées de manière à croiser les fines entailles (3) .

6. Pneumatique de véhicule selon l'une quelconque ou plusieurs des revendications précédentes, **caractérisé en ce que** les fines entailles (3), en vue de dessus sur la bande de roulement, sont des fines entailles de forme sinusoïdale.

7. Pneumatique de véhicule selon l'une quelconque ou plusieurs des revendications précédentes, **caractérisé en ce que** les rainures (9) sont seulement disposées à l'intérieur de la surface d'appui au sol du pneumatique de véhicule.

8. Pneumatique de véhicule selon l'une quelconque ou plusieurs des revendications précédentes, **caractérisé en ce que** ce pneumatique de véhicule est un pneumatique de véhicule léger ou de camionnette.
